# EUROPEAN PATENT SPECIFICATION

(11) **EP 0 744 416 B1**
(45) Date of publication and mention of the grant of the patent: **05.08.1998**
(21) Application number: 96303304.8
(22) Date of filing: 13.05.1996
(51) Int. Cl.: C08F 10/00, C08F 4/655, C08F 4/656

(54) **Process for preparing a Ziegler-Natta catalyst**
Verfahren zur Herstellung eines Ziegler-Natta-Katalysators
Procédé de préparation d'un catalyseur du type Ziegler-Natta

(30) Priority: 22.05.1995 FR 9506392
(43) Date of publication of application: 27.11.1996
(73) Proprietor: BP Chemicals Limited, London EC2M 7BA (GB); BP CHEMICALS S.N.C., 92400 Courbevoie (FR)
(72) Inventor: Collomb, Joelle, c/o BP Chemicals S.N.C., 13117 Lavera (FR); Jenny, Charles, c/o BP Chemicals S.N.C., 13117 Lavera (FR)
(74) Representative: Hymers, Ronald Robson

(56) References cited:
- EP-A- 0 093 494
- EP-A- 0 127 530
- EP-A- 0 249 869
- EP-A- 0 595 574
- WO-A-96/01279
- US-A- 4 711 865
- CHEMICAL ABSTRACTS, vol. 92, no. 10, 10 March 1980 Columbus, Ohio, US; abstract no. 77167, page 18; column 1; XP002010715 & JP-A-54 123 594 (ASAHI CHEMICAL INDUSTRY)

## Description

The present invention relates to a process for preparation of a catalyst of Ziegler-Natta type. It also relates to a process for the polymerization of olefins using the said catalyst.

According to European Patent Application EP-A-453 088 it is known to prepare an intermediate solid catalytic product in the manufacture of a catalyst of Ziegler-Natta type including magnesium, chlorine, tetravalent titanium and a refractory oxide support. The intermediate solid catalytic product is manufactured by bringing the refractory oxide support into contact successively with (a) a dialkylmagnesium optionally mixed or complexed with a trialkyl aluminium, (b) a monochloride of an organic compound, and (c) a tetravalent titanium compound. The catalytic product thus obtained makes it possible to manufacture ethylene polymers with a relatively good catalyst activity. However, the polymers, especially linear low density polyethylenes, manufactured with the aid of this catalytic product have a relatively low bulk density. This phenomenon is observed in particular when the polymers are obtained by gas-phase polymerization processes during which they may be subjected to particularly intense stresses which may cause the fragmentation of the polymer particles.

European Patent Application EP-A-595 574 also discloses a process for preparing an intermediate solid catalytic product similar to that described in EP-A-453 088, apart from bringing the refractory oxide support into contact with an organic silicon compound. If a trialkylaluminium is employed during the preparation, it is only used as a mixture or a complex with a dialkylmagnesium.

American Patent US-A-4 711 865 discloses a process for preparing a Ziegler catalyst supported on a refractory oxide. The catalyst preparation comprises bringing the refractory oxide support into contact with an organometallic compound which essentially comprises an organomagnesium compound optionally used in the form of a mixture or a complex with an alkylaluminium compound.

European Patent Application EP-A-249 869 and Japanese Patent Application JP-A-54 123 594 disclose processes for preparing Ziegler catalyst comprising a step for preparing a support completely different from a refractory oxide. The support essentially comprises magnesium and aluminium chlorides produced by precipitation.

A process for preparation of a catalyst of Ziegler-Natta type which has a high activity during the polymerization of olefins has now been found. The catalyst prepared makes it possible to manufacture, especially by a gas-phase polymerization process, polymers which have an improved morphology which is particularly appraised by a high bulk density. Furthermore, the polymers obtained have a relatively narrow molecular mass distribution.

The subject-matter of the present invention is therefore a process for preparation of a catalyst of Ziegler-Natta type comprising a granular support based on a refractory oxide, characterized in that the stages of the process include:
- (a) and (b) bringing the granular support, in the course of two separate stages (a) and (b), into contact with a dialkylmagnesium and then with an organoaluminium compound or with an organoaluminium compound and then with a dialkylmagnesium,
- (c) bringing the product originating from stages (a) and (b) into contact with an organic halogen compound, and
- (d) bringing the solid originating from stage (c) into contact with at least one tetravalent titanium compound.

The process of the invention comprises bringing a granular support into contact with various compounds. In practice, all the operations of bringing into contact are performed with stirring in an inert liquid diluent which may be at least one liquid hydrocarbon such as an alkane or a cycloalkane which has, for example, from 5 to 12 carbon atoms. In most cases n-heptane or n-hexane is employed. As a result, the compounds which are brought into contact with the granular support are advantageously soluble in the liquid diluent employed.

According to the invention it is essential that the contact of the granular support with the dialkylmagnesium and the organoaluminium compound is produced in two separate stages. This means that the organoaluminium compound and the dialkylmagnesium are not used in the form of a mixture or in the form of a complex. The two contacts are therefore produced consecutively. The order of the two stages does not matter. However, especially when the organoaluminium compound is a halogen compound, it is preferred to produce the contact with the dialkylmagnesium before the contact with the organoaluminium compound.

As a result, according to the present invention, the process may preferably comprise the stages which include:
- (a) bringing the granular support into contact with a dialkylmagnesium,
- (b) bringing the product originating from stage (a) into contact with an organoaluminium compound,
- (c) bringing the product originating from stage (b) into contact with an organic halogen compound, and
- (d) bringing the product originating from stage (c) into contact with at least one tetravalent titanium compound.

According to another alternative form the process may also comprise the stages which include:
- (a) bringing the granular support into contact with an organoaluminium compound,
- (b) bringing the product originating from stage (a) into contact with a dialkylmagnesium,
- (c) bringing the product originating from stage (b) into contact with an organic halogen compound, and
- (d) bringing the product originating from stage (c) into contact with at least one tetravalent titanium compound.

The granular support based on a refractory oxide generally contains hydroxyl functional groups and advantageously has a specific (BET) surface of between 50 and 1000 m²/g and a pore volume of between 0.5 and 5 ml per g. Before it is used in the process of the invention, the granular support may be preferably substantially rid of free water and may have a reduced proportion of hydroxyl functional groups, for example lower than 0.5 millimoles per gram. In particular, to obtain this result, the granular support may be subjected to a heat treatment performed at a temperature ranging from 100 to 950°C and which is in most cases higher than 200°C and in particular higher than 500°C, for a period of 1 to 10 hours. Another method may include bringing the granular support into contact with an organic silicon compound, as shown later. The granular support may be chosen from a silica, an alumina or a mixture of these two oxides. It may consist of particles which have a mass-average diameter of between 20 and 250 µm, preferably between 30 and 100 µm. The granular support may be microspheroidal. The granular support is preferably a silica which is, in particular, microspheroidal.

The process of the invention includes especially (a) and (b) the successive bringing of the granular support into contact with a dialkylmagnesium and an organoaluminium compound, in any order. The dialkylmagnesium may correspond to the general formula MgR¹R² in which R¹ and R², being identical or different, are alkyl radicals which may contain from 2 to 10, preferably from 3 to 8 carbon atoms. The former may be dibutylmagnesium employed in solution in n-hexane or any other dialkylmagnesium which is soluble in a liquid hydrocarbon. The contact is generally performed in a liquid hydrocarbon at a temperature ranging from 20 to 100°C, preferably from 30 to 70°C, and according to a duration which may range from 15 minutes to 5 hours. A quantity of dialkylmagnesium ranging from 0.1 to 8 millimoles, preferably from 0.5 to 4 millimoles per g of granular support, may be used. This contact may be produced as described in European Patent Application EP-A-453 088. The solid obtained at the end of this bringing into contact advantageously contains from 0.1 to 4, preferably from 0.5 to 2.5 millimoles of magnesium per g of granular support. The product originating from this bringing into contact is not necessarily washed, in particular when this contact is brought about before bringing into contact with the organoaluminium compound.

According to the present invention the process also includes bringing into contact with an organoaluminium compound. The latter may have the following general formula Al(R³)ₚ(X¹)₃₋ₚ in which R³ is an alkyl radical which may have from I to 10 carbon atoms, X¹ is a hydrogen atom or a halogen atom like chlorine or bromine, and p is a whole or fractional number ranging from 1 to 3. This compound may be in particular a trialkylaluminium such as triethylaluminium or trimethylaluminium, an alkylaluminium monochloride or sesquichloride or dichloride, or an alkylaluminium monohydride or dihydride. This bringing into contact is generally performed in a liquid hydrocarbon at a temperature ranging from 20 to 100°C, preferably from 30 to 70°C, and according to a period which may range from 15 minutes to 5 hours. A quantity of organo aluminium compound ranging from 0.001 to 8 millimoles, preferably from 0.005 to 3, and more particularly from 0.01 to 1.5 millimoles per g of granular support may be used. It may also be employed in a quantity such that the molar ratio of the organoaluminium compound to the dialkylmagnesium is between 0.05 and 0.35, preferably between 0.10 and 0.20. The product originating from this bringing into contact is not necessarily washed, in particular when this bringing into contact is carried out before the bringing into contact with the dialkylaluminium.

The invention also includes (c) bringing the product originating from stages (a) and (b) with an organic halogen compound which is employed as halogenating agent for the magnesium and the aluminium. In most cases it is a chlorinating agent. During this bringing into contact, the product originating from stages (a) and (b), containing magnesium and aluminium, is employed, that is to say the granular support which has previously and successively been brought into contact with the dialkylmagnesium and the organoaluminium compound in any order. The organic halogen compound may have the general formula described in European Patent Application EP-A-453 088. A secondary alkyl monochloride is preferably employed, such as, for example, secondary propyl chloride and secondary butyl chloride, or a tertiary alkyl monochloride such as tert-butyl chloride. Aryl or aralkyl monochlorides or polychlorides may also be employed. This bringing into contact with the organic halogen compound may be performed as described in European Patent Application EP-A-453 088. The quantity of organic halogen compound used may be stoichiometrically at least sufficient in order to convert, by a halogenation reaction, the magnesium present in the support into a magnesium dihalide and the aluminium present into an aluminium trihalide. More particularly, when the halogenation reaction is a chlorination reaction, the magnesium is converted into magnesium dichloride and the aluminium into aluminium trichloride. In particular, from 0.2 to 30 millimoles of organic halogen compound may be used per g of granular support.

According to the process, a contact (d) of the product originating from stage (c) with at least one tetravalent titanium compound is produced. The latter is generally a compound which is soluble in a hydrocarbon. It is a compound in which the titanium is at its maximum valency, that is to say 4. In most cases it has the general formula Ti(X²)₄₋ₙ(OR⁴)ₙ in which X² is a halogen atom such as bromine or chlorine, R⁴ an alkyl group containing from 1 to 10 carbon atoms, and n a whole or fractional number ranging from 0 to 4, preferably from 0 to 3. In most cases titanium tetrachloride, titanium tetraisopropoxide, titanium tetra-n-propoxide, titanium tetra-n-butoxide or a mixture of these compounds is employed. In general, when the catalyst is employed for manufacturing a linear low density polyethylene, the use of a single and highly halogenated titanium compound, such as, for example, a compound which has the above formula in which n is lower than 0.5, is avoided. It is thus preferred to employ a tetravalent titanium compound of formula in which n = 1 to 3, preferably n = 2.

The quantity of titanium compound(s) used depends on the desired quantity of titanium to be bound to the granular support. In general from 0.05 to 1 mol of titanium compound(s) is employed per mole of magnesium present in the granular support.

The contact of the product originating from stage (c) with the titanium compound(s) is preferably produced in a liquid hydrocarbon in which the titanium compound(s) is (are) soluble. This hydrocarbon may be a saturated aliphatic hydrocarbon such as n-hexane or n-heptane or a mixture of these hydrocarbons. The contact may take place at a temperature ranging from 0 to 120°C, preferably from 20 to 100°C. In practice it may be performed in various ways. The titanium compound(s) may be added to a suspension containing the product originating from stage (c) or the product originating from stage (c) may be added to a solution containing the titanium compound(s).

When at least two titanium compounds are brought into contact with the product originating from stage (c), they may be used simultaneously, for example in the form of a premix, or else one after the other. A titanium compound may be used in the pure state or diluted in a hydrocarbon. Although most, if not all, of the titanium compound becomes bound to the granular support, the solid product originating from the bringing into contact (d) is advantageously washed with the aid of a liquid hydrocarbon.

According to the present invention the process may advantageously additionally include (e) bringing a product originating from one of the stages (a) to (d) or preferably the initial granular support into contact with a silicon compound which is reactive especially towards the hydroxyl functional groups of the support. This silicon compound may be employed in order to decrease the content of hydroxyl functional groups which are initially present in the granular support. The bringing into contact (e) may preferably constitute the first bringing into contact in the process and may thus be carried out before the bringing into contact (a) and (b). The silicon compound is generally an organic compound. It may be chosen from the silicon compounds which have the formula Si(R⁵)ₘ(X³)₄₋ₘ in which R⁵ is an alkyl group which has, for example, from 1 to 6 carbon atoms, X³ is a halogen atom such as chlorine or bromine or an alkoxy group which has, for example, from 1 to 6 carbon atoms, and 1 ≤ m ≤ 3. The silicon compound may also be a silazane such as hexamethyldisilazane (HMDS) or a siloxane such as hexamethyldisiloxane (HMDSO). A mixture of silicon compounds may be employed. During the bringing into contact, between 0.1 and 2, preferably between 0.2 and 1 millimoles of silicon compound may be used per g of granular support. In practice, the contact is preferably brought about in a liquid hydrocarbon at a temperature ranging from 20 to 120°C, preferably from 50 to 100°C, and according to a period ranging from 10 minutes to 10 hours. Following this bringing into contact, the solid obtained is advantageously washed with a liquid hydrocarbon.

Furthermore, the process may also include (f) bringing the granular support or a product originating from one of the stages (a) to (d) or optionally (e) into contact with an electron-donor compound free from labile hydrogen. The latter may be an aliphatic ether like propyl ether, a cyclic ether like tetrahydrofuran or dioxane, a polyether like methyl glycol ether or diethyl glycol ether, an aliphatic ester like ethyl acetate, an aromatic ester like ethyl benzoate or dibutyl phthalate, a tertiary amine like triethylamine, an amide like dimethylformamide, a siloxane like tetraethoxysilane or dichlorodiethoxysilane, or an ortho ester like triethyl orthoacetate. A siloxane or an ortho ester is preferably employed.

The bringing of the granular support or the product originating from one of the stages (a) to (d) or optionally (e) into contact with the electron-donor compound may be performed by using between 0.01 and 2, preferably between 0.05 and 0.5 moles of electron-donor compound per mole of magnesium subsequently present in the granular support or present in the solid product originating from one of the stages (a) to (d) or optionally (e). It is preferably performed with stirring in a liquid hydrocarbon like a saturated aliphatic hydrocarbon such as n-hexane, n-heptane or a mixture of the two. It may be performed at a temperature ranging from 0 to 120°C, preferably ranging from 20 to 100°C. It may last from 1 minute to 10 hours, preferably from 5 minutes to 1 hour. In practice, this contact may be brought about in various ways. For example, the electron-donor compound may be added to a suspension containing the granular support or the product originating from one of the stages (a) to (d) or optionally (e) according to a period that may range from 5 minutes to 30 minutes. The electron-donor compound may be employed in the pure state or in solution in a liquid hydrocarbon. The solid product originating from this bringing into contact is advantageously washed with the aid of a liquid hydrocarbon. The granular support or the solid product originating from one of the stages (a) to (d) or optionally (e) may be brought into contact with the electron-donor compound simultaneously with one or more of the said stages or else during a stage that is separate from the said stages. This bringing into contact may particularly be performed following the bringing into contact (c) and before the bringing into contact (d).

According to a very advantageous alternative form of the invention, the catalyst is prepared from a granular support containing hydroxyl functional groups by carrying out the stages which include:
- (e) bringing the granular support into contact with an organic silicon compound which is reactive towards hydroxyl functional groups, such as that described above,
- (a) and (b) bringing, in the course of two separate stages (a) and (b), the product originating from stage (e) into contact with the dialkylmagnesium and then with the organoaluminium compound, or with the organoaluminium compound and then with the dialkylmagnesium,
- (c) bringing the product originating from stages (a) and (b) into contact with the organic halogen compound,
- (f) bringing the product originating from stage (c) into contact with the electron-donor compound free from labile hydrogen, as described above, and
- (d) bringing the product originating from stage (f) into contact with the tetravalent titanium compound.

The catalyst obtained by the process of the invention in most cases contains from 0.1 to 1 millimole of titanium per g of granular support. It may be converted into olefin prepolymer, particularly of ethylene or of propylene, before any polymerization. The prepolymerization is generally carried out by bringing the catalyst into contact with at least one olefin, in the presence of a cocatalyst such as described later.

The catalyst may be advantageously used for (co)polymerizing in industrial conditions at least one olefin containing from 2 to 10 carbon atoms such as, for example, ethylene, propylene, 1-butene, 1-hexene or 4-methyl-1-pentene. More particularly it is employed for manufacturing ethylene polymers or copolymers which have a density that can range from 0.880 to 0.970 g/cm³.

The (co)polymers may be manufactured in suspension in a liquid hydrocarbon or advantageously in the gas phase in a reactor with a fluidized and/or mechanically stirred bed. The catalyst is used with a cocatalyst which is chosen from organometallic compounds of a metal belonging to groups I to III of the Periodic Classification of the elements. An organoaluminium compound is advantageously employed, and preferably trimethylaluminium or triethylaluminium.

The (co)polymers obtained with the aid of the catalyst of the invention contain little residual titanium. In most cases they contain less than 10, preferably less than 5 parts per million (ppm) by weight of titanium. They may have a melt index, measured at 190°C under a 2.16 kg load (MI_{2.16}), of between 0.01 and 200 g per 10 minutes. They may have a relatively narrow molecular mass distribution characterized especially by a width of between 2.5 and 4.5 and in most cases between 3 and 4. They consist of a powder which has a bulk density ranging in most cases from 0.37 to 0.55 g/cm³. The polymer particles may be substantially spherical and may have a mass-average diameter of between 300 and 1200 µm.

The following examples illustrate the invention.

### Example 1

### a) Preparation of a catalyst

The operation is carried out in a fluidized-bed reactor consisting essentially of a vertical cylinder 75 cm in height and 5 cm in diameter, which has a disengagement vessel above it. This reactor is provided with a fluidization bottom plate consisting of a porous material, placed in the lower part of the cylinder. It is also provided with an electrical resistance heater and a feed of fluidizing gas.

Into the reactor, which is maintained at 60°C and fed with a fluidizing gas consisting of nitrogen containing less than 2 parts per million by volume (pmv) of water vapour, which travels according to an upward velocity of 12 cm/s, are introduced 17.6 kg of microspheroidal silica sold under the trade name "ES 70" ® by the company Joseph Crosfield and Sons (Great Britain). It consists of spheroidal particles which have a mass-average diameter of 45 µm. It is dried for 5 hours at 800°C. The following operations are performed under a nitrogen atmosphere.

130 l of n-hexane, 17.6 kg of the previously dried silica and 26.4 moles of HMDS, at a temperature of 50°C, are introduced into a 240-litre reactor made of stainless steel and provided with a stirring device rotating at 166 revolutions per minute. The mixture thus obtained is stirred for 2 hours at 80°C. The solid product thus obtained is washed three times, each time with 130 l of n-hexane at 50°C.

26.4 moles of dibutylmagnesium, at a temperature of 50°C, are then introduced into the reactor over 30 minutes. The mixture thus obtained is stirred for 1 hour at 50°C.

3.4 moles of triethylaluminium are introduced over 30 minutes, still at 50°C. The mixture obtained is kept stirred for 1 hour at 50°C.

63.1 moles of tert-butyl chloride are introduced into the reactor over 30 minutes with stirring and at 50°C. At the end of this time the mixture is stirred for 1 hour at 50°C. The solid product obtained is washed three times with 130 l of n-hexane.

2.64 moles of triethyl orthoacetate are introduced next into the reactor over 15 minutes at 50°C. The mixture obtained is stirred for 1 hour at 50°C.

Next, still at 50°C, 2.64 moles of titanium tetrachloride and 2.64 moles of titanium tetra-n-propoxide are introduced simultaneously into the reactor over 1 hour. The mixture obtained is next stirred for 2 hours at 50°C, then washed 5 times, each time with 130 l of n-hexane, and finally cooled to a temperature close to 20°C.

The solid catalyst obtained contains, per gram of silica:
- 1.44 millimoles of magnesium,
- 3.34 millimoles of chlorine,
- 0.16 millimoles of aluminium,
- 0.20 millimoles of titanium.

### b) Gas-phase copolymerization of ethylene

300 kg of an anhydrous polyethylene powder are introduced under a nitrogen atmosphere into a fluidized-bed reactor 74 cm in diameter as a powder charge originating from a preceding reaction. A gas mixture heated to 85°C, consisting of hydrogen, ethylene, 1-butene and nitrogen and propelled at an upwarld velocity of 44 cm/s, is next introduced therein. The partial pressures of the constituents of this mixture are:

| | |
|---|---|
| hydrogen | 0.28 MPa |
| ethylene | 0.40 MPa |
| 1-butene | 0.016 MPa |
| nitrogen | 1.2 MPa. |

The catalyst obtained previously, according to a flow rate of 36 g per hour, and triethylaluminium, according to a flow rate of 180 millimoles per hour, are then introduced into this reactor. After stabilization of the polymerization conditions, a copolymer powder which has the following properties is obtained according to a flow rate of 72 kg/h:
- a bulk density of 0.43 g/cm³
- a melt index MI_{2.16} of 4.3 g/10 minutes
- a density of 0.955 g/cm³
- a weight-average diameter of 500 µm
- a content of fine particles which have a diameter smaller than 125 µm of 1.2 % by weight
- a titanium content of 4 ppm

### Example 2

### Gas-phase copolymerization of ethylene

The operation is carried out as in Example 1 (b) with the difference that the temperature of the fluidizing gas is 88°C instead of 85°C and that the partial pressures of the constituents of the gas mixture are:

| | |
|---|---|
| hydrogen | 0.30 MPa |
| ethylene | 0.50 MPa |
| 1-butene | 0.02 MPa |
| nitrogen | 1.08 MPa |

After stabilization of the polymerization conditions a copolymer powder which has the following properties is obtained according to a flow rate of 75 kg/h:
- a bulk density of 0.42 g/cm³
- a melt index MI_{2.16} of 4.4 g/10 minutes
- a density of 0.954 g/cm³
- a weight-average diameter of 500 µm
- a content of fine particles which have a diameter smaller than 125 µm of 1.5 % by weight
- a titanium content of 4 ppm.

### Example 3

### Gas-phase copolymerization of ethylene

300 kg of an anhydrous polyethylene powder are introduced under a nitrogen atmosphere into a fluidized-bed reactor 74 cm in diameter as a powder charge originating from a preceding reaction. A gas mixture heated to 80°C, consisting of hydrogen, ethylene, 1-hexene and nitrogen and propelled at an upward velocity of 44 cm/s, is next introduced therein. The partial pressures of the constituents of this mixture are:

| | |
|---|---|
| hydrogen | 0.09 MPa |
| ethylene | 0.60 MPa |
| 1-hexene | 0.096 MPa |
| nitrogen | 1.11 MPa |

The catalyst prepared in Example 1 (a), according to a flow rate of 42 g per hour, and triethylaluminium, according to an Al/Ti molar ratio of 7, are then introduced into this reactor. After stabilization of the polymerization conditions a copolymer powder which has the following properties is obtained according to a flow rate of 105 kg/h:
- a bulk density of 0.37 g/cm³
- a melt index MI_{2.16} of 1.5 g/10 minutes
- a density of 0.919 g/cm³
- a weight-average diameter of 650 µm
- a content of fine particles which have a diameter smaller than 125 µm of 0.5 % by weight
- a titanium content of 3.2 ppm.

### Example 4

### Gas-phase copolymerization of ethylene

The operation is carried out as in Example 3 with the difference that the temperature of the fluidizing gas is 85°C instead of 80°C and that the partial pressures of the constituents of the gas mixture are:

| | |
|---|---|
| hydrogen | 0.078 MPa |
| ethylene | 0.60 MPa |
| 1-hexene | 0.096 MPa |
| nitrogen | 1.12 MPa |

After stabilization of the polymerization conditions a copolymer powder which has the following properties is obtained according to a flow rate of 100 kg/h:
- a bulk density of 0.37 g/cm³
- a melt index MI_{2.16} of 1.1 g/10 minutes
- a density of 0.918 g/cm³
- a weight-average diameter of 650 µm
- a content of fine particles which have a diameter smaller than 125 µm of 0.5 % by weight
- a titanium content of 2.5 ppm.

### Example 5 (comparative)

### a) Preparation of a catalyst

The operation is carried out as in Example 1 (a) except for the fact that the dibutylmagnesium and the triethylaluminium are added to the reactor simultaneously in the form of a mixture sold by Akzo under reference "Magala 7.5 E" ®. The quantities of aluminium and of magnesium used are the same as in Example 1 (a).

The solid catalyst obtained contains, per gram of silica:
- 1.43 millimoles of magnesium,
- 3.33 millimoles of chlorine,
- 0.186 millimoles of aluminium,
- 0.20 millimoles of titanium.

### b) Copolymerization of ethylene

300 kg of an anhydrous polyethylene powder are introduced under a nitrogen atmosphere into a fluidized-bed reactor 74 cm in diameter as a powder charge originating from a preceding reaction. A gas mixture heated to 89°C consisting of hydrogen, ethylene, 1-butene and nitrogen and propelled at an upward velocity of 44 cm/s, is next introduced therein. The partial pressures of the constituents of this mixture are:

| | |
|---|---|
| hydrogen | 0.38 MPa |
| ethylene | 0.70 MPa |
| 1-butene | 0.021 MPa |
| nitrogen | 0.89 MPa |

The catalyst obtained previously, according to a flow rate of 47 g per hour, and triethylaluminium, according to an Al/Ti molar ratio of 7.8, are then introduced into this reactor. After stabilization of the polymerization conditions a copolymer powder which has the following properties is obtained according to a flow rate of 94 kg/h:
- a bulk density of 0.39 g/cm³
- a melt index MI_{2.16} of 4.4 g/10 minutes
- a density of 0.952 g/cm³
- a weight-average diameter of 500 µm
- a content of fine particles which have a diameter smaller than 125 µm of 1.5 % by weight
- a titanium content of 4 ppm.

In this example it is noted that the bulk density obtained is distinctly lower than that obtained in Examples I and 2, which are carried out according to the invention.

### Example 6 (comparative)

### Gas-phase copolymerization of ethylene

The operation is carried out as in Example 3 except for the fact that the catalyst of Example 5 (a) is employed instead of the catalyst of Example 1 (a) and the fact that the partial pressures of the constituents of the gas mixture are:

| | |
|---|---|
| hydrogen | 0.10 MPa |
| ethylene | 0.60 MPa |
| 1-hexene | 0.096 MPa |
| nitrogen | 1.2 MPa |

After stabilization of the polymerization conditions a copolymer powder which has the following properties is obtained according to a flow rate of 77 kg/h:
- a bulk density of 0.35 g/cm³
- a melt index MI_{2.16} of 0.8 g/10 minutes
- a density of 0.917 g/cm³
- a weight-average diameter of 750 µm
- a content of fine particles which have a diameter smaller than 125 µm of 0.5 % by weight
- a titanium content of 3 ppm.

In this example the bulk density of the copolymer obtained is distinctly lower than that obtained in Examples 3 and 4 which are carried out according to the invention.

## Claims

1. Process for the preparation of a catalyst of Ziegler-Natta type comprising a granular support based on a refractory oxide, characterized in that the stages of the process include:
- (a) and (b) bringing the granular support, in the course of two separate stages (a) and (b), into contact with a dialkylmagnesium and then with an organoaluminium compound, or with an organoaluminium compound and then with a dialkylmagnesium,
- (c) bringing the product originating from stages (a) and (b) into contact with an organic halogen compound, and
- (d) bringing the solid originating from stage (c) into contact with at least one tetravalent titanium compound.

2. Process according to Claim 1, characterized in that the dialkylmagnesium corresponds to the general formula MgR¹R² in which R¹ and R², being identical or different, are alkyl radicals containing from 2 to 10 carbon atoms.

3. Process according to Claim 1 or 2, characterized in that the organoaluminium compound has the general formula Al(R³)ₚ(X¹)₃₋ₚ in which R³ is an alkyl radical containing from 1 to 10 carbon atoms, X¹ is a hydrogen atom or a halogen atom, and p is a whole or fractional number ranging from 1 to 3.

4. Process according to any one of Claims 1 to 3, characterized in that it includes bringing the granular support or a product originating from one of the stages (a) to (d) into contact with a silicon compound.

5. Process according to any one of Claims 1 to 4, characterized in that it includes bringing the granular support or a product originating from one of the stages (a) to (d) into contact with an electron-donor compound free from labile hydrogen.

6. Process according to any one of Claims 1 to 5, characterized in that the catalyst is prepared from a granular support by carrying out the stages which include:
- (e) bringing the granular support into contact with a silicon compound,
- (a) and (b) bringing, in the course of two separate stages (a) and (b), the product originating from stage (e) into contact with the dialkylmagnesium and then with the organoaluminium compound, or with the organoaluminium compound and then with the dialkylmagnesium,
- (c) bringing the product originating from stages (a) and (b) into contact with the organic halogen compound,
- (f) bringing the solid originating from stage (c) into contact with the electron-donor compound free from labile hydrogen, and
- (d) bringing the product originating from stage (f) into contact with the tetravalent titanium compound.

7. Process for (co-)polymerizing at least one olefin containing from 2 to 10 carbon atoms in the presence of the catalyst prepared by a process according to any one of Claims 1 to 6.

8. Process for manufacturing ethylene polymers or copolymers having a density in the range from 0.880 to 0.970 g/cm³ in suspension in a liquid hydrocarbon or in the gas phase of a fluidized and/or mechanically stirred bed reactor in the presence of the catalyst prepared by a process according to any one of Claims 1 to 6.

9. Process according to Claim 7 or 8, characterized in that a cocatalyst chosen from the organometallic compounds of a metal belonging to groups I to III of the Periodic Classification of the elements is used.

10. Process according to Claim 9, characterized in that the cocatalyst is trimethylaluminium or triethylaluminium.

## Patentansprüche

1. Verfahren zur Herstellung eines Katalysators vom Ziegler-Natta-Typ, umfassend einen granulären Träger, basierend auf einem feuerfesten Oxid, dadurch gekennzeichnet, daß die Stufen des Verfahrens einschließen:
- (a) und (b) Inkontaktbringen des granulären Trägers im Verlauf von zwei getrennten Stufen (a) und (b) mit einem Dialkylmagnesium und anschließend mit einer Organoaluminiumverbindung oder mit einer Organoaluminiumverbindung und anschließend mit einem Dialkylmagnesium,
- (c) Inkontaktbringen des aus Stufen (a) und (b) stammenden Produkts mit einer organischen Halogenverbindung, und
- (d) Inkontaktbringen des aus Stufe (c) stammenden Feststoffes mit mindestens einer vierwertigen Titanverbindung.

2. Verfahren nach Anspruch 1, dadurch gekennzeichnet, daß das Dialkylmagnesium der allgemeinen Formel MgR¹R² entspricht, worin R¹ und R², die gleich oder verschieden sind, Alkylreste, die 2 bis 10 Kohlenstoffatome enthalten, darstellen.

3. Verfahren nach Anspruch 1 oder 2, dadurch gekennzeichnet, daß die Organoaluminiumverbindung die allgemeine Formel Al(R³)ₚ(X¹)₃₋ₚ aufweist, in der R³ einen Alkylrest, der 1 bis 10 Kohlenstoffatome enthält, darstellt, X¹ ein Wasserstoffatom oder ein Halogenatom darstellt und p eine ganze oder gebrochene Zahl im Bereich von 1 bis 3 ist.

4. Verfahren nach einem der Ansprüche 1 bis 3, dadurch gekennzeichnet, daß es Inkontaktbringen des granulären Trägers oder eines aus einer der Stufen (a) bis (d) stammenden Produkts mit einer Siliciumverbindung einschließt.

5. Verfahren nach einem der Ansprüche 1 bis 4, dadurch gekennzeichnet, daß es Inkontaktbringen des granulären Trägers oder eines aus einer der Stufen (a) bis (d) stammenden Produkts mit einer Elektronendonorverbindung, die von labilem Wasserstoff frei ist, einschließt.

6. Verfahren nach einem der Ansprüche 1 bis 5, dadurch gekennzeichnet, daß der Katalysator aus einem granulären Träger durch Ausführen der Stufen hergestellt wird, die einschließen:
- (e) Inkontaktbringen des granulären Trägers mit einer Siliciumverbindung,
- (a) und (b) Inkontaktbringen des aus Stufe (e) stammenden Produkts im Verlauf der zwei getrennten Stufen (a) und (b) mit dem Dialkylmagnesium und anschließend mit der Organoaluminiumverbindung oder mit der Organoaluminiumverbindung und anschließend mit dem Dialkylmagnesium,
- (c) Inkontaktbringen des aus Stufen (a) und (b) stammenden Produkts mit der organischen Halogenverbindung,
- (f) Inkontaktbringen des aus Stufe (c) stammenden Feststoffes mit der Elektronendonorverbindung, die von labilem Wasserstoff frei ist, und
- (d) Inkontaktbringen des aus Stufe (f) stammenden Produkts mit der vierwertigen Titanverbindung.

7. Verfahren zum (Co)polymerisieren von mindestens einem Olefin, das 2 bis 10 Kohlenstoffatome enthält, in Gegenwart des durch eines der Verfahren nach Ansprüchen 1 bis 6 hergestellten Katalysators.

8. Verfahren zur Herstellung von Ethylenpolymeren oder -copolymeren mit einer Dichte im Bereich von 0,880 bis 0,970 g/cm³ in Suspension in einem flüssigen Kohlenwasserstoff oder in der Gasphase in einem Wirbelschicht- und/oder mechanisch gerührtem Bettreaktor, in Gegenwart des durch ein Verfahren nach einem der Ansprüche 1 bis 6 hergestellten Katalysators.

9. Verfahren nach Anspruch 7 oder 8, dadurch gekennzeichnet, daß ein Cokatalysator, ausgewählt aus den Organometallverbindungen eines Metalls, das zu den Gruppen I bis III des Periodensystems der Elemente gehört, verwendet wird.

10. Verfahren nach Anspruch 9, dadurch gekennzeichnet, daß der Cokatalysator Trimethylaluminium oder Triethylaluminium ist.

## Revendications

1. Procédé pour la préparation d'un catalyseur du type Ziegler-Natta comprenant un support granulaire à base d'un oxyde réfractaire, caractérisé en ce que les étapes du procédé consistent:
- (a) et (b) à mettre le support granulaire, au cours de deux étapes séparées (a) et (b), en contact avec un dialkylmagnésium puis avec un composé organoaluminique, ou avec un composé organoaluminique puis avec un dialkylmagnésium,
- (c) à mettre le produit provenant des étapes (a) et (b) en contact avec un composé organique halogéné, et
- (d) à mettre le solide provenant de l'étape (c) en contact avec au moins un composé de titane tétravalent.

2. Procédé selon la revendication 1, caractérisé en ce que le dialkylmagnésium correspond à la formule générale MgR¹R² dans laquelle R¹ et R², étant identiques ou différents, sont des radicaux alkyle contenant 2 à 10 atomes de carbone.

3. Procédé selon l'une des revendications 1 ou 2, caractérisé en ce que le composé organoaluminique a la formule générale Al(R³)ₚ(X₁)₃₋ₚ dans laquelle R³ est un radical alkyle contenant 1 à 10 atomes de carbone, X¹ est un atome d'hydrogène ou un atome d'halogène et p est un nombre entier ou fractionnaire allant de 1 à 3.

4. Procédé selon l'une des revendications 1 à 3, caractérisé en ce qu'il consiste à mettre le support granulaire ou un produit provenant d'une des étapes (a) à (d) en contact avec un composé de silicium.

5. Procédé selon l'une des revendications 1 à 4, caractérisé en ce qu'il consiste à mettre le support granulaire ou un produit provenant d'une des étapes (a) à (d) en contact avec un composé donneur d'électrons exempt d'hydrogène labile.

6. Procédé selon l'une des revendications 1 à 5, caractérisé en ce que le catalyseur est préparé à partir d'un support granulaire en effectuant les étapes qui consistent:
- (e) à mettre le support granulaire en contact avec un composé de silicium,
- (a) et (b), à mettre, au cours des deux étapes séparées (a) et (b), le produit provenant de l'étape (e) en contact avec le dialkylmagnésium puis avec le composé organoaluminique, ou avec le composé organoaluminique puis avec le dialkylmagnésium,
- (c) à mettre le produit provenant des étapes (a) et (b) en contact avec le composé organique halogéné,
- (f) à mettre le solide provenant de l'étape (c) en contact avec le composé donneur d'électrons exempt d'hydrogène labile, et
- (d) à mettre le produit provenant l'étape (f) en contact avec le composé de titane tétravalent.

7. Procédé pour (co)polymériser au moins une oléfine contenant 2 à 10 atomes de carbone en présence du catalyseur préparé à l'aide d'un procédé selon l'une des revendications 1 à 6.

8. Procédé pour fabriquer des polymères ou copolymères d'éthylène ayant une masse volumique dans la gamme de 0,880 à 0,970 g/cm³ en suspension dans un hydrocarbure liquide ou dans la phase gazeuse d'un réacteur fluidisé et/ou mécaniquement agité en présence du catalyseur préparé à l'aide d'un procédé selon l'une des revendications 1 à 6.

9. Procédé selon l'une des revendications 7 ou 8, caractérisé en ce qu'un cocatalyseur choisi parmi les composés organométalliques d'un métal appartenant aux Groupes I à III du Tableau Périodique des Eléments est utilisé.

10. Procédé selon la revendication 9, caractérisé en ce que le cocatalyseur est le triméthylaluminium ou le triéthylaluminium.
